# NEW EUROPEAN PATENT SPECIFICATION

(11) **EP 0 677 243 B2**
(45) Date of publication and mention of the opposition decision: **19.12.2007**
(45) Mention of the grant of the patent: 09.01.2002
(21) Application number: 95200841.5
(22) Date of filing: 03.04.1995
(51) Int. Cl.: A01J 7/00

(54) **A method of automatically milking animals and an implement for applying same**
Verfahren zum automatischen Melken von Tieren und Vorrichtung zu deren Anwendung
Méthode de traite automatique d'animaux et dispositif pour sa mise en oeuvre

(30) Priority: 14.04.1994 NL 9400589; 27.10.1994 NL 9401785; 24.02.1995 NL 9500362
(43) Date of publication of application: 18.10.1995
(60) Divisional application: 01202453.5
(73) Proprietor: MAASLAND N.V., 3155 PD Maasland (NL)
(72) Inventor: van den Berg, Karel, NL-2971 BR Bleskensgraaf (NL)
(74) Representative: Corten, Maurice Jean F.M.

(56) References cited:
- EP-A- 0 091 892
- EP-A- 0 137 367
- EP-A- 0 534 565
- EP-A- 0 551 956
- NL-A- 8 602 505
- D.Schillingmann, "Versuchsanlage zum automatischen Melken - Konzeption und Ergebnisse", VDI/MEG Kolloquium Landtechnik, Tagung Braunschweig-Völkenrode, 5./6. Dezember 1990, pp. 70-91, Heft 9, Robotereinsatz in der Landwirtschaft am Beispiel des Melkens
- "The effects of incomplete milking on chronic mastitis caused by streptecoccus agalactiae", Schalm, O.W. et al., pp. 823-832, Journal of Dairy Science, vol. XXVI, No. 19, September 1943
- Machine Milking and Lactation, Bramley, A.J. et al., Insight Books, 1992, pp. 366-368
- Abstract: "Milking the 30,000-pound herd", Mein, G.A. et al., Journal of dairy science, Oct. 1993, vol. 76(10), pp. 3294-3300
- "Status, results and further development of an automatic milking system", Artmann, R., pp. 23-32, Proceedings of the International Symposium on Prospects for Automatic Milking, Wageningen, Netherlands, November 1992

## Description

The present invention relates to an implement in accordance with the preamble of claim 1.

Such constructions are known, e.g. from EP-A-0 534 565. They might have the disadvantage that they not always prevent illnesses such as mastitis satisfactorily. It is the object of the present invention to prevent illnesses as much as possible. To that end, if an illness has been detected and the milk flow has fallen below a defined threshold value (D1), this udder quarter is automatically stripped, while otherwise the milking process is stopped. If so desired, this threshold value (D1) may be different for various animals.

When the milk flow has fallen to below a predetermined threshold value, it is ensured that the milking operation is ceased; the udder quarter is assumed to have been stripped more or less. More specifically, to prevent mastitis, it is important for the milking operation to be stopped when the milk flow has become too small. If then the milking operation would be continued, the teats might get irritated to such an extent that the risk of mastitis might increase. However, once mastitis has been detected in an udder quarter, it may be of importance to nevertheless continue milking. Therefore, it should be recommended to adapt the method of automatically milking animals, as described in the foregoing, to this situation. Therefore, once mastitis has been detected in an udder quarter and after the milk flow originating therefrom, possibly combined with that from one or more other udder quarters, has fallen to below said threshold value (D1), this udder quarter or these udder quarters is/are automatically stripped further, by continuing the milking process, while otherwise the milking process is stopped.

According to the invention there is provided an implement as claimed in claim 1. More specifically, when the milk flow sensors used are of the type in which the through-flow of a given quantity of milk is indicated by means of electrodes, it is, in accordance with the invention, important for the milk flow sensors to be provided in the milk lines near the connection of the milk lines to the collector element. The milk lines themselves then act as a kind of buffer, via which the milk obtained from the udder quarters is supplied in a pulsed mode. When at consecutive pulsed strokes less milk is fed through the line to a milk flow sensor, it takes a longer period of time before the volume between the two electrodes is filled with milk and the period of time between the signals supplied by the electrodes will increase. This period of time, which becomes longer towards the end of the milking operation, is a measure of the milk flow. The predetermined threshold values then are in a direct relationship with the length of the time interval between consecutive signals produced by the electrodes.

Furthermore, according to the invention, a shut-off element for the milk lines connected to the teat cups may be provided under each of the teat cups, each of the shut-off elements closing the milk line after said control signal has been supplied. Furthermore, according to the invention, there may be present a pulsator for producing in each of the teat cups a pulsating underpressure, which in the relevant teat cup is neutralized after the said control signal has been applied, whilst ambient pressure is admitted thereinto.

For a better understanding of the invention and to show how the same may be carried into effect, reference will now be made, by way of example, to the accompanying drawings, in which:
Figure 1 illustrates a shed organization, in which the implement for automatically milking animals in accordance with the invention is accommodated;
Figure 2 illustrates schematically a portion of the implement for automatically milking animals, and
Figures 3A to 3E illustrate schematically the position of the various doors to and from the milking area and the isolation area in a specific embodiment.

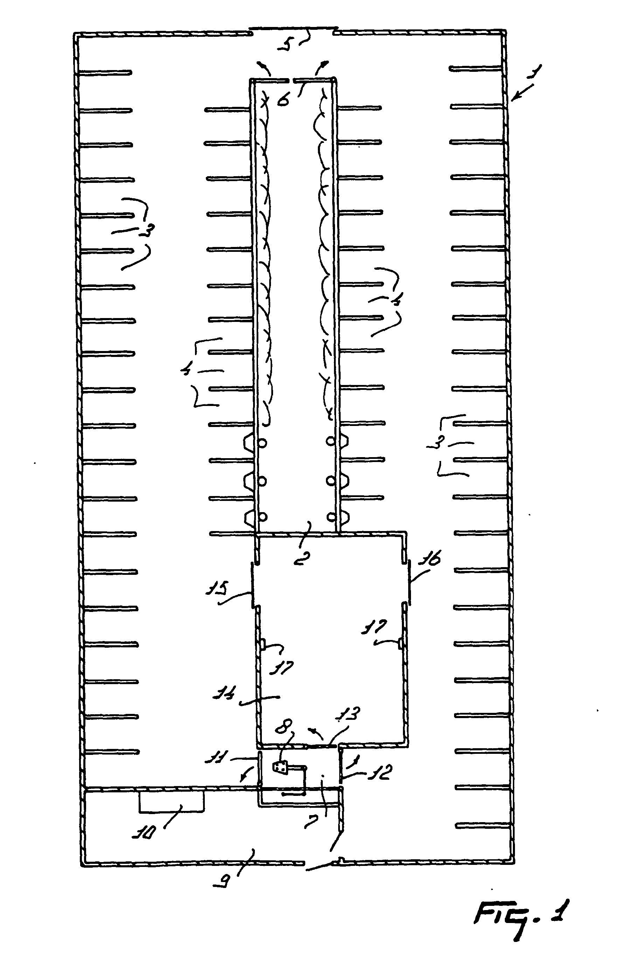

Figure 1 shows a loose housing 1, in which a feeding area 2 is present in the longitudinal direction thereof. At both sides of the feeding area 2, cubicles 3 are located along substantially the overall length of the loose housing 1 along the sides of the outer wall and, at that side where the feeding area 2 is located there are feeding stations 4. Via doors 5 and 6 in the housing 1, fodder in the form of hay can be transferred by means of a tractor driving in the feeding area 2 to feed channels and/or concentrate to feeding troughs on the feeding stations 4. The cubicles 3 and the feeding stations 4 are arranged such that there is left sufficient room for the animals to walk between the cubicles and the feeding stations, so that they can move to a sufficient extent and basically can walk around the shed. Near the short side of the shed there is an area 7, in which a machine for automatically milking animals is positioned, which milking machine includes a milking robot 8 for automatically connecting the teat cups to the teats of an animal to be milked and disconnecting same therefrom. Between the milking area 7 and the short side of the housing 1 there is a computer area 9, in which a computer 10 is located together with all the equipment that is part of the milking machine but is not disposed in the milking area 7 proper. The milking area 7 has an entrance door 11 and two exit doors 12 and 13. The animals can enter the milking area from the exercise area via the door 11, whilst the animals can enter the exercise area again from the milking area via the door 12. As soon as an animal has entered the milking area from the exercise area or, via the exercise area, from the pasture, the animal's identity will be established in the customary manner. By means of the cow recognition system used therefor, access is obtained to a data file present in the computer of the system for this animal. In this file has been recorded inter alia how much time has elapsed since her previous milking turn. From the subsequently established time differences between the moment when an animal enters the milking box, or at least reports at the milking box (in case the animal is identified prior to entering same), and the previous milking turn, there can be determined an average value of these time differences. Preferably, this is done on the basis of a progressive average, e.g. each time over the last seven days. Furthermore the spreading in this average is determined. The said average value and the spreading therein are recorded in the memory file for the relevant animal and serve as a basis for a possible warning or placing on an attention list, when an animal does not report in time at the milking box. When since the previous milking turn there has elapsed a period of time corresponding to the said average value plus a certain additional time determined by the said spreading without the animal having reported, then the animal must be collected in order to be milked.

Next to the milking area 7 there is an isolation area 14, which can be reached from the milking area via the door 13. In addition, the isolation area 14 is accessible via doors 15 and 16. In the area 14, animals can be separated from the animals present in the exercise area of the shed 1. This may be necessary because the animals have such an udder shape that the teat cups cannot be connected automatically, because they are to be inseminated or because their hoofs are to be clipped, in which event the farmer can lead the animals e.g. via the door 15 into the isolation area 14, but also because mastitis has been detected in the animals present in the milking area 7, which animals are then led from there via the door 13 into the isolation area 14 instead of into the exercise area of the housing 1. The farmer can fetch animals from the isolation area 14 via the door 16. Using the computer 10, which is further used for controlling the automatic milking procedure and the automatic connecting of the teat cups to the teats and disconnecting same therefrom, and also for performing all possible actions that are also of importance to the milking operation, the number of animals which are led from the milking area 7 to the isolation area 14 can be updated. When, however, the farmer himself leads animals into the isolation area via the door 15, or removes animals therefrom e.g. via the door 16, then the number of animals in the isolation area, as recorded in the computer 10, will not correspond to the actual number. To prevent this error, there are present counting means 17 which are connected to the computer 10. These counting means are preferably disposed near the doors 15 and 16 and can be operated manually by the farmer. When the farmer leads an animal via one of the doors 15, 16 into the isolation area, then, by operating the counting means 17, he can bring the number of animals indicated thereby in correspondence with the actual number. Likewise, when he fetches an animal from the isolation area 14 via one of the doors 15, 16, the farmer can adjust, by operating the counting means, the number of animals present in the isolation area, so that, since the counting means 17 are connected to the computer 10, the correct number of animals present in the isolation area is updated at all times in the computer 10 and, if so desired, can be displayed on a display screen provided on the counting means. When in the absence of the farmer too many animals are passed from the milking area 7 to the isolation area 14, an alarm can be triggered to warn the farmer that the number of animals in the isolation area is too high.

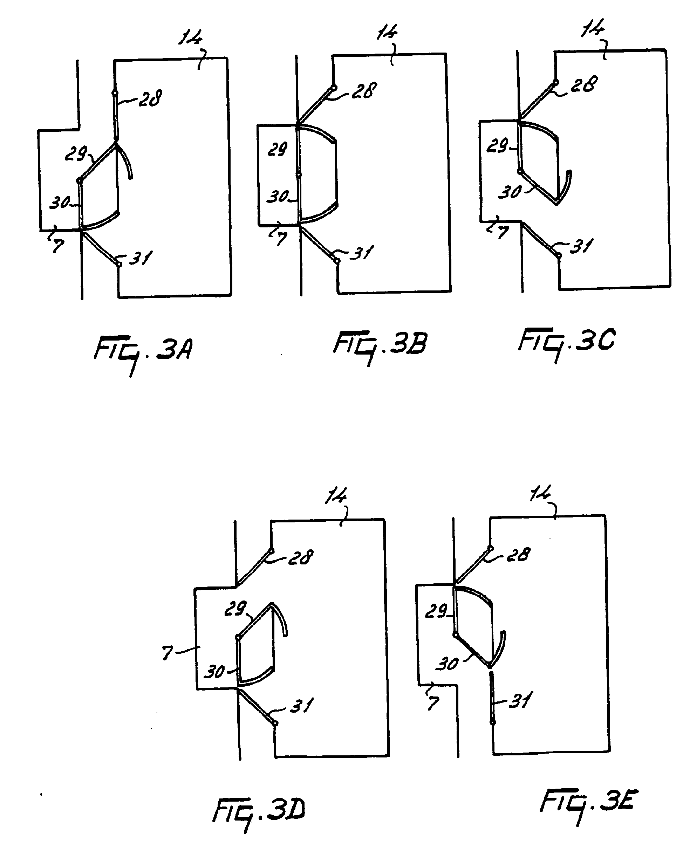

As has already been stated before, there may be present an isolation area for animals which have such an udder shape that the teat cups cannot be connected automatically. After these animals have been identified, they can be passed on to the isolation area, without the milking robot trying to connect the teat cups. Also animals, whose connection of the teat cups has failed even after repeated efforts, can be quided via the milking box to the isolation area, certainly during the so-called curfew times, e.g. during the night. The animals guided to the isolation area for the above reasons should be milked yet at a later instant. Then they are guided from the isolation area to the milking box again, where the teat cups usually will have to be connected manually. This manner of acting is represented in Figures 3A to 3E. In these drawings, the milking area is indicated again by reference numeral 7 and the isolation area by reference numeral 14. The entering and leaving of these areas is effected by means of, preferably computer-controlled, doors 28, 29, 30 and 31. In the position of the doors as shown in Figure 3A, an animal can enter the milking box 7 from the exercise area in the shed; the doors 28 and 29 are subsequently closed (see Figure 3B). When thereafter the connection of the teat cups fails or this is not even tried due to the deviating udder shape, then the door 30 is opened and the animal is guided to the isolation area 14 (see Figure 3C). Then the door 30 is closed. When in this manner a certain number of non-automatically to be milked animals have been collected in the isolation area, then these will be admitted from the isolation area 14 to the milking box in the presence of the farmer and at a moment to be decided by him. After the door 29 has opened (see Figure 3D), an animal can enter the milking box from the isolation area, after which the door 29 is closed again, the animal is subsequently milked and dismissed from the milking box by opening of the doors 30 and 31 (see Figure 3E) and guided to the exercise area of the shed. Then the doors 30 and 31 close, while the door 29 is opened again in order to admit the next animal from the isolation area to the milking box.

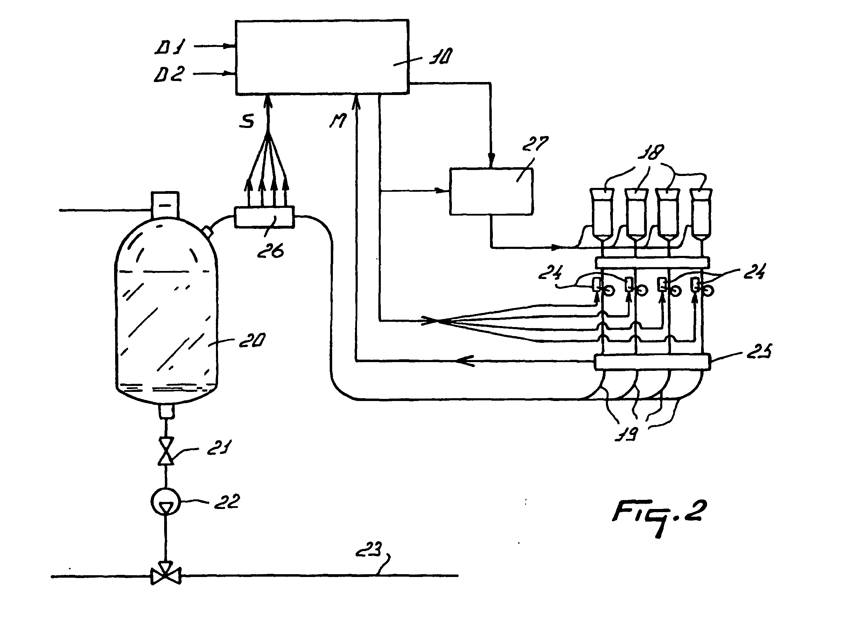

The implement for automatically milking animals, such as it is partially and schematically shown in Figure 2, includes teat cups 18 which are automatically connected to the teats of an animal to be milked with the aid of the milking robot 8. Each of the milk lines 19 connected to the teat cups 18 ends individually into a milk jar 20, from which, each time when a predetermined quantity of milk is contained therein, this milk is pumped by means of a pump 22 via a shut-off device 21 into a line 23 leading to a (non-shown) milk tank. Under the teat cups 18, each of the milk lines 19 includes a shut-off device 24, while furthermore a mastitis sensor 25 and a milk flow sensor 26 are incorporated in each of the milk lines 19. The milk flow sensors 26 are accommodated in the milk lines 19 near the region where these milk lines end in the milk jar 20. Figure 2 once again shows the computer 10. Signals S from the individual milk flow sensors 26 are applied to this computer 10, each of these signals S being indicative of the milk flow in a relevant milk line 19. In addition, signals M supplied by each of the mastitis sensors 25 are applied to the computer 10. In the present embodiment, the mastitis sensors are constituted by milk conductivity sensors. The signals supplied by these sensors, which signals are a measure of the conductivity of the milk, are compared in the computer 10 to the progressive, weighted or non-weighted average of the milk conductivity recorded during previous milking turns, whereafter, when the last-measured milk conductivity exceeds the progressive, weighted or non-weighted average to an excessive extent, an attention signal is displayed on the display screen of the computer 10, on the basis of which signal the farmer can decide whether it is a matter of mastitis and whether measures to counteract it must be taken or not. These data, and also possibly other data relevant to the milking of the animal or to her health, can not only be displayed on the display screen of the computer, but also be shown on attention lists to be printed out or even on a display screen to be arranged e.g. in the shed or elsewhere in the farm, so that the farmer can see the relevant data from a distance and at a single glance, without him having to strain his eyes on a computer display screen. By keying-in an affirmation in the computer 10 there is produced a signal M, which indicates that it is indeed a matter of mastitis. This signal can, of course, also be produced automatically when the last-measured milk conductivity has exceeded the progressive, weighted or non-weighted average recorded in the computer to a given extent. In the computer 10, threshold values D1 and D2 may have been recorded in a programme for the milk flow in the lines 19, or these threshold values may be entered via a keyboard. In the computer 10, a threshold value D is derived from the signal M and the threshold values D1 and D2, for which it holds that, as soon as the signal S from a milk flow sensor 26 has fallen to below the threshold value D, the computer 10 produces a control signal. This control signal can be applied to a shut-off device 24 for closing the relevant milk line and for thereafter neutralizing the underpressure in the relevant teat cup and for optionally disconnecting the teat cup immediately thereafter. For the benefit of the milking operation there is present a pulsator 27, which is controlled by the computer 10 and which produces a pulsating underpressure in each of the teat cups. After the said control signal has been applied, the pulsating pressure in the relevant teat cup is to be neutralized, which is effected by admitting ambient pressure thereinto. The threshold value D, such as it is established in the computer 10, satisfies the Boolean expression D = D1.M̅ + D2.M. In other words, in the computer 10 there is determined a mastitis-dependent threshold value for the milk flow in a milk line 19, whilst, as soon as the milk flow has fallen to such a level that it has arrived below the predetermined threshold value D, milking of the relevant udder quarter is to be stopped. Since the second threshold value, i.e. the threshold value which holds for the case when mastitis has been found in an udder quarter, is lower than the first threshold value, a relevant udder quarter is milked for a longer period of time than would be the case when no mastitis was detected in an udder quarter.

Instead of the second threshold value D2 it is also possible to utilize a predetermined time interval, which starts after the milk flow in the relevant line has fallen to below the threshold value D1, for stripping the udder quarter.

The invention is not limited to the embodiment described in the foregoing, but includes all kinds of modifications, of course, as far as they are within the protective scope of the accompanying claims.

## Claims

1. An implement for automatically milking animals including one or more milking robots (8) and a computer (10) by means of which the animals are milked, teat cups (18) and a collector element (20) to which milk obtained from each udder quarter is supplied through separate milk lines (19), in one or more of which lines (19) a mastitis sensor (25) for automatically detecting mastitis and a milk flow sensor (26) are incorporated, as well as means for stopping the milking process by neutralizing the underpressure in the teat cups and/or means for disconnecting the teat cups, **characterized in that** in response to signals coming from the milk flow sensor (26) and signals (M) from the mastitis sensor (25) and making use of an udder quarter dependent threshold value (D1) for the milk flow stored in the computer and a further mastitis dependent threshold value (D2) stored in the computer, the milking process is continued after the milk flow has fallen to below said quarter dependent threshold value (D1) until a control signal is generated by the computer and applied to said means to stop the milking process by neutralizing the underpressure in a relevant teat cup (18) and/or for disconnecting same, when the milk flow in a relevant milk line has fallen to below said mastitis dependent threshold value (D2) stored in the computer or as an alternative when a predetermined time interval has elapsed after the milk flow has fallen to below said quarter dependent threshold value (D1), while the milking processes stopped of mastitis is not detected and the milk flow has fallen below the udder quarter dependent value (D1).

2. An implement as claimed in claim 1, **characterized in that** the milk flow sensors (26) are disposed in the milk lines (19) near the connection of the milk lines (19) to be collector element (20).

3. An implement as claimed in claim 1 or 2, **characterized in that** under each of the teat cups (18) there is a shut-off element (24) for milk lines (19) connected to the teat cups (18), each of the shut-off elements (24) closing a milk line (19) in response to said control signal.

4. An implement as claimed in any one of claims 1-3, **characterized in that** there is present a pulsator (27) for producing a pulsating underpressure in each of the teat cups (18), which pulsating underpressure in the relevant teat cup (18) is neutralized, after the said control signal has been applied to it, which is effected by admitting ambient pressure thereinto.

5. An implement as claimed in any one of claims 1-4, **characterized in that** there is present a milking robot (8) for automatically connecting the teat cups (18) to the teats of an animal to be milked and for automatically disconnecting the teat cups as soon as the milk flow in a given milk line (19) has fallen to below the mastitis-dependent threshold value (D2) preset in the computer (10), or as soon as a predetermined time interval has elapsed after the milk flow has fallen to below the udder quarter-dependent threshold value (D1).

6. An implement as claimed in any one of claims 1-5, **characterized in that** it includes an area (7) comprising a milking robot (8) and arranged for automatic milking, as well as an isolation area (14) contiguous thereto, to which the animals are transferred for specific reasons, e.g. because they have such an udder shape that they cannot be milked automatically, because mastitis has been detected, because animals have reported to the milking robot too short a period of time after the precious milking turn, because the animals are to be inseminated, because the hoofs of the animals must be clipped, etc.

7. An implement as claimed in claim 6, **characterized in that** animals which are difficult to be milked automatically, e.g. those having only three teats, those having very unequal teat heights, etc., are detained in the isolation area (14) for predetermined periods of time during which access to the milking area (7) is to be denied to them, e.g. during the night.

8. An implement as claimed in claim 7, **characterized in that** there are present alarm means, with the aid of which it can be indicated that milking of an animal present in the area (7) arranged therefor is found to be impossible, e.g. because the milking robot (8) does not succeed in connecting the teat cups (18) to the teats of the animal, which alarm means are put out of operation at least for animals which are difficult to be milked automatically during the periods of time in which access to the area (7) is denied to them.

9. An implement as claimed in claim 7 or 8, **characterized in that** in or near the isolation area (14) there are disposed counting means (17), by means of which the number of animals present in the isolation area (14) can be updated manually, more in particular when the animals are lead into or from the isolation area (14), respectively, via a further entrance and/or exit (15, 16).

10. An implement as claimed in claim 9, **characterized in that** the counting means (17) are in connection with the computer (10) for the computerized adjusting of the number of animals displayed by the counting means (17), when the animals enter the isolation area (14) from the milking area (7).

11. An implement as claimed in any one of claims 1-10, **characterized in that** there is present a milking robot (8) for automatically connecting the teat cups (18) to the teats of an animal to be milked and automatically disconnected same, which milking robot (8) includes means for, after milking, automatically rubbing, when mastitis has been detected in an udder quarter, an anti-mastitis ointment on at least the teat of the relevant udder quarter.

12. An implement as claimed in any one of the claims 1-11, **characterized in that** in the shed area where the implement is arranged or elsewhere in the farm there is present a display screen, on which the most relevant data as to automatically milking the animal and as to her health condition can be visibly depicted from a distance.

## Patentansprüche

1. Vorrichtung zum automatischen Melken von Tieren mit einem oder mehreren Melkrobotern (8) und einem Computer (10), mittels dessen die Tiere gemolken werden, mit Zitzenbechern (18) und einem Aufnahmeelement (20), in das von jedem Euterviertel gewonnene Milch über getrennte Milchleitungen (19) geleitet wird, wobei in einer oder mehreren dieser Leitungen (19) ein Mastitis-Sensor (25) zum automatischen Detektieren von Mastitis und ein Milchfluss-Sensor (26) angeordnet sind, sowie mit einer Vorrichtung zum Beenden des Melkvorganges durch Neutralisieren des Unterdruckes in den Zitzenbechern und/oder einer Vorrichtung zum Abnehmen der Zitzenbecher,
**dadurch gekennzeichnet, dass** als Reaktion auf Signale von dem Milchfluss-Sensor (26) und Signale (M) von dem Mastitis-Sensor (25) und unter Verwendung eines im Computer gespeicherten, euterviertelspezifischen Grenzwertes (D1) für den Milchfluss und eines weiteren im Computer gespeicherten, mastitisspezifischen Grenzwertes (D2) der Melkvorgang fortgesetzt wird, nachdem der Milchfluss den euterviertelspezifischen Grenzwert (D1) unterschritten hat, bis von dem Computer ein Steuersignal erzeugt und an die Vorrichtungen gegeben wird, um den Melkvorgang durch Neutralisieren des Unterdruckes in einem entsprechenden Zitzenbecher (18) zu beenden und/oder diesen abzunehmen, wenn der Milchfluss in einer entsprechenden Milchleitung den im Computer gespeicherten, mastitisspezifischen Grenzwert (D2) unterschritten hat, oder wenn alternativ ein vorgegebener Zeitraum verstrichen ist, seit der Milchfluss den euterviertelspezifischen Grenzwert (D1) unterschritten hat, wobei der Melkvorgang beendet wird, wenn keine Mastitis detektiert wird und der Milchfluss den euterviertelspezifischen Wert (D1) unterschritten hat.

2. Vorrichtung nach Anspruch 1,
**dadurch gekennzeichnet, dass** die Milchfluss-Sensoren (26) in den Milchleitungen (19) nahe dem Anschluss der Milchleitungen (19) an das Aufnahmeelement (20) angeordnet sind.

3. Vorrichtung nach Anspruch 1 oder 2,
**dadurch gekennzeichnet, dass** unter jedem der Zitzenbecher (18) ein Absperrelement (24) für an die Zitzenbecher (18) angeschlossene Milchleitungen (19) angeordnet ist, wobei jedes der Absperrelemente (24) eine Milchleitung (19) als Reaktion auf das Steuersignal verschließt.

4. Vorrichtung nach einem der Ansprüche 1 bis 3,
**dadurch gekennzeichnet, dass** ein Pulsator (27) zum Erzeugen eines pulsierenden Unterdruckes in jedem der Zitzenbecher (18) vorhanden ist, wobei der pulsierende Unterdruck in dem betreffenden Zitzenbecher (18) nach Eingeben des Steuersignals in den Pulsator neutralisiert wird, was durch das Einlassen von Umgebungsdruck erfolgt.

5. Vorrichtung nach einem der Ansprüche 1 bis 4,
**dadurch gekennzeichnet, dass** ein Melkroboter (8) vorhanden ist, um die Zitzenbecher (18) automatisch an die Zitzen eines zu melkenden Tieres anzuschließen und die Zitzenbecher automatisch abzunehmen, sobald der Milchfluss in einer bestimmten Milchleitung (19) den zuvor in dem Computer (10) eingestellten, mastitisspezifischen Grenzwert (D2) unterschritten hat, oder sobald ein vorgegebener Zeitraum verstrichen ist, seit der Milchfluss den euterviertelspezifischen Grenzwert (D1) unterschritten hat.

6. Vorrichtung nach einem der Ansprüche 1 bis 5,
**dadurch gekennzeichnet, dass** die Vorrichtung einen einen Melkroboter (8) umfassenden und zum automatischen Melken dienenden Bereich (7) sowie einen daran angrenzenden Isolierbereich (14) enthält, in den die Tiere aus bestimmten Gründen verlegt werden, beispielsweise weil sie eine solche Euterform aufweisen, dass sie automatisch nicht gemolken werden können, weil eine Mastitis festgestellt wurde, weil sich Tiere innerhalb zu kurzer Zeit nach dem vorhergehenden Melken beim Melkroboter eingefunden haben, weil die Tiere besamt werden sollen, weil die Hufe der Tiere gekürzt werden müssen, usw.

7. Vorrichtung nach Anspruch 6,
**dadurch gekennzeichnet, dass** Tiere, die automatisch schwer zu melken sind, beispielsweise Tiere mit nur drei Zitzen, Tiere mit sehr ungleichen Zitzenlängen, usw. im Isolierbereich (14) während vorgegebener Zeiträume zurückgehalten werden, in denen ihnen der Zugang zum Melkbereich (7) zu verweigern ist, beispielsweise während der Nacht.

8. Vorrichtung nach Anspruch 7,
**dadurch gekennzeichnet, dass** eine Alarmvorrichtung vorhanden ist, mittels der angezeigt werden kann, dass das Melken eines Tieres, das sich in dem dafür vorgesehenen Bereich (7) befindet, nicht durchgeführt werden kann, beispielsweise weil der Melkroboter (8) die Zitzenbecher (18) nicht an die Zitzen des Tieres anschließen kann, wobei die Alarmvorrichtung zumindest bei Tieren, die automatisch schwer zu melken sind, während der Zeiträume, in denen ihnen der Zutritt zum Bereich (7) verweigert wird, außer Betrieb gesetzt wird.

9. Vorrichtung nach Anspruch 7 oder 8,
**dadurch gekennzeichnet, dass** in oder nahe dem Isolierbereich (14) eine Zählvorrichtung (17) angeordnet ist, mittels der die Anzahl von im Isolierbereich (14) befindlichen Tieren manuell aktualisiert werden kann, insbesondere wenn die Tiere durch einen weiteren Eingang und/oder Ausgang (15, 16) in den Isolierbereich (14) hinein- bzw. aus ihm herausgeführt werden.

10. Vorrichtung nach Anspruch 9,
**dadurch gekennzeichnet, dass** die Zählvorrichtung (17) mit dem Computer (10) in Verbindung steht, um die von der Zählvorrichtung (17) angezeigte Anzahl von Tieren computergestützt einzustellen, wenn die Tiere den Isolierbereich (14) vom Melkbereich (7) aus betreten.

11. Vorrichtung nach einem der Ansprüche 1 bis 10,
**dadurch gekennzeichnet, dass** ein Melkroboter (8) vorhanden ist, um die Zitzenbecher (18) automatisch an die Zitzen eines zu melkenden Tieres anzuschließen und automatisch abzunehmen, wobei der Melkroboter (8) eine Vorrichtung enthält, um nach dem Melken zumindest die Zitze des betreffenden Euterviertels automatisch mit einer Antimastitis-Salbe einzureiben, wenn in einem Euterviertel Mastitis festgestellt wurde.

12. Vorrichtung nach einem der Ansprüche 1 bis 11,
**dadurch gekennzeichnet, dass** in dem Stallbereich, in dem die Vorrichtung angeordnet ist, oder an anderer Stelle auf dem Hof ein Bildschirm vorhanden ist, auf dem die wichtigsten Daten über das automatische Melken des Tieres und seinen Gesundheitszustand aus einer Entfernung sichtbar angezeigt werden können.

## Revendications

1. Dispositif pour la traite automatique d'animaux, comprenant un ou plusieurs robots de traite (8) et un ordinateur (10) au moyen duquel les animaux sont traits, des gobelets trayeurs (18) et un élément collecteur (20) auquel le lait obtenu à partir de chaque quartier de pis est fourni par l'intermédiaire de lignes de lait distinctes (19), dans une ou plusieurs desquelles lignes (19) un détecteur de mastite (25) pour détecter automatiquement les mastites et un détecteur de débit de lait (26) sont incorporés, ainsi que des moyens pour arrêter le processus de traite en neutralisant la sous-pression dans les gobelets trayeurs et/ou des moyens pour détacher les gobelets trayeurs, **caractérisé en ce que**, en réponse aux signaux provenant du détecteur de débit de lait (26) et des signaux (M) provenant du détecteur de mastite (25) et en utilisant une valeur de seuil dépendant d'un quartier de pis (D1) pour le débit de lait mémorisé dans l'ordinateur et une valeur de seuil supplémentaire dépendant d'une mastite (D2) mémorisée dans l'ordinateur, l'opération de traite est poursuivie après que le débit de lait soit tombé au-dessous de ladite valeur de seuil dépendant du quartier de pis (D1) jusqu'à ce qu'un signal de commande soit généré par l'ordinateur et appliqué auxdits moyens afin d'arrêter l'opération de traite en neutralisant la sous-pression dans un gobelet trayeur approprié (18) et/ou pour détacher le susdit, lorsque le débit de lait dans une ligne de lait appropriée est tombé au-dessous de ladite valeur de seuil dépendant d'une mastite (D2) mémorisée dans l'ordinateur ou alternativement lorsqu'un intervalle de temps prédéterminé s'est écoulé après que le débit de lait soit tombé au-dessous de ladite valeur de seuil dépendant du quartier de pis (D1), tandis que le processus de traite est arrêté si la mastite n'est pas détectée et le courant de lait est tombé au-dessous de la valeur (D1) dépendant du quartier de pis.

2. Dispositif selon la revendication 1, **caractérisé en ce que** les détecteurs de débit de lait (26) sont disposés dans les lignes de lait (19) à proximité du raccordement des lignes de lait (19) à l'élément collecteur (20).

3. Dispositif selon la revendication 1 ou 2, **caractérisé en ce que**, sous chacun des gobelets trayeurs (18) il y a un élément d'arrêt (24) pour les lignes de lait (19) raccordées aux gobelets trayeurs (18), chacun des éléments d'arrêt (24) fermant une ligne de lait (19) en réponse audit signal de commande.

4. Dispositif selon l'une quelconque des revendications 1 à 3, **caractérisé en ce qu'**un pulsateur (27) est présent pour produire une sous-pression pulsatoire dans chacun des gobelets trayeurs (18), laquelle sous-pression pulsatoire dans le gobelet trayeur approprié (18) est neutralisée, après que ledit signal de commande ait été appliqué à celui-ci, ce qui est effectué en admettant la pression ambiante dans celui-ci.

5. Dispositif selon l'une quelconque des revendications 1 à 4, **caractérisé en ce qu'**un robot de traite (8) est présent pour raccorder automatiquement les gobelets trayeurs (18) aux trayons d'un animal à traire et pour détacher automatiquement les gobelets trayeurs dès que le débit de lait dans une ligne de lait donnée (19) est tombé au-dessous d'une valeur de seuil dépendant d'une mastite prédéterminée dans l'ordinateur (10), ou dès qu'un intervalle de temps prédéterminé s'est écoulé après que le débit de lait soit tombé au-dessous d'une valeur de seuil fixée ou dépendant du quartier de pis.

6. Dispositif selon l'une quelconque des revendications 1 à 5, **caractérisé en ce qu'**il comprend une zone (7) comprenant un robot de traite (8) et agencée pour la traite automatique, ainsi qu'une zone d'isolement (14) contiguë à celle-ci, dans laquelle les animaux sont transférés pour des raisons spécifiques, par exemple parce qu'ils ont une forme de pis telle qu'ils ne peuvent pas être traits de manière automatique, parce qu'une mastite a été détectée, parce que les animaux ont été signalés au robot de traite trop tôt après l'opération de traite précédente, parce que les animaux doivent être inséminés, parce que les sabots des animaux doivent être coupés, etc.

7. Dispositif selon la revendication 6, **caractérisé en ce que** les animaux qui sont difficiles à traire automatiquement, par exemple ceux ayant seulement trois trayons, ceux ayant des hauteurs de trayon très inégales, etc., sont détenus dans la zone d'isolement (14) pendant des périodes de temps prédéterminées pendant lesquelles l'accès à la zone de traite (7) doit leur être interdit, par exemple, pendant la nuit.

8. Dispositif selon la revendication 7, **caractérisé en ce que** des moyens d'alarme sont présents, à l'aide desquels il peut être indiqué que la traite d'un animal présent dans la zone (7) agencée pour cela s'avère impossible, par exemple parce que le robot de traite (8) ne réussit pas à raccorder les gobelets trayeurs (18) aux trayons de l'animal, lesquels moyens d'alarme sont mis hors service au moins pour les animaux qui sont difficiles à traire automatiquement pendant les périodes de temps au cours desquelles l'accès à la zone (7) leur est interdit.

9. Dispositif selon la revendication 6 ou 8, **caractérisé en ce que** dans ou à proximité de la zone d'isolement (14), des moyens de comptage (17) sont disposés, au moyen desquels le nombre d'animaux présents dans la zone d'isolement (14) peut être mis à jour manuellement, plus particulièrement lorsque les animaux sont respectivement amenés dans la zone d'isolement (14) ou sortis de celle-ci par l'intermédiaire d'une entrée et/ou d'une sortie supplémentaire (15, 16).

10. Dispositif selon la revendication 9, **caractérisé en ce que** les moyens de comptage (17) sont connectés à l'ordinateur (10) pour l'ajustement informatisé du nombre d'animaux affiché par les moyens de comptage (17), lorsque les animaux entrent dans la zone d'isolement (14) à partir de la zone de traite (7).

11. Dispositif selon l'une quelconque des revendications 1 à 10, **caractérisé en ce qu'**un robot de traite (8) est présent pour raccorder automatiquement les gobelets trayeurs (18) aux trayons d'un animal à traire et pour détacher automatiquement les susdits, lequel robot de traite (8) comprend des moyens pour appliquer automatiquement, après la traite, lorsqu'une mastite a été détectée dans un quartier de pis, une pommade anti-mastite au moins sur le trayon du quartier de pis approprié.

12. Dispositif selon l'une quelconque des revendications 1 à 11, **caractérisé en ce que**, dans la zone d'étable où le dispositif est agencé ou ailleurs dans la ferme, un écran d'affichage est présent, sur lequel les données les plus appropriées concernant la traite automatique de l'animal et son état de santé peuvent être affichées de manière visible à distance.
